# EUROPÄISCHE PATENTANMELDUNG

(11) **EP 3 695 725 A1**
(43) Veröffentlichungstag der Anmeldung: **19.08.2020**
(21) Anmeldenummer: 19156971.4
(22) Anmeldetag: 13.02.2019
(51) Int. Cl.: A21D 13/36, A23G 3/54, A21C 15/02

(54) **VERFAHREN ZUR HERSTELLUNG EINES FÜLLBAREN WAFFELPRODUKTES UND DAMIT HERSTELLBARES WAFFELPRODUKT**

(71) Anmelder: Bahlsen GmbH & Co. KG, 30163 Hannover (DE)
(72) Erfinder: Nold, Sven-Erik, 31832 Springe (DE); Gebauer, Sven, 29223 Celle (DE); Sierth, Stefan, 30890 Barsinghausen (DE); Bruns, Rainer, 31552 Rodenberg (DE); Reichstein, Karl, 31552 Rodenberg (DE)
(74) Vertreter: Bohmann, Armin K.

(57) **Zusammenfassung**

Die vorliegende Erfindung betrifft ein Verfahren zur Herstellung eines mit einer Füllmasse gefüllten Gebäckproduktes, wobei das Verfahren umfasst Einrollen eines blattförmigen, rollbaren Gebäckteils mittels eines Einrollmittels, wobei durch das Einrollen des blattförmigen, rollbaren Gebäckteils ein mit einem Hohlraum versehenes Gebäckprodukt entsteht und die Wandung des mit einem Hohlraum versehenen Gebäckproduktes zumindest teilweise mehrlagig ausgebildet ist, und Einbringen der Füllmasse durch das Einrollmittel in das Gebäckprodukt.

## Beschreibung

Die vorliegende Erfindung betrifft ein Verfahren zur Herstellung eines mit einer Füllmasse gefüllten Gebäckproduktes und ein damit herstellbares Gebäckprodukt.

Gebäckprodukte sind beliebte, durch Backen auf einem Backblech oder in einer Form in einem Ofen hergestellte Produkte aus Teig oder einer Masse. Der dazu verwendete Teig oder die dazu verwendete Masse ist ein weiches, zusammenhängendes Gemisch aus Mehl und einer Flüssigkeit, typischerweise, Wasser, das durch Einwirken von mechanischer Energie hergestellt werden.

Eine Variante eines Gebäckproduktes ist ein Waffelprodukt, ein in seiner einfachsten Variante aus Mehl und Wasser bestehendes Feingebäck, das typischerweise zwischen zwei heißen Eisen, den sog. Waffeleisen, gebacken wird. Bei der industriellen Herstellung von Waffeln werden gas- oder elektrisch beheizte automatische Waffelbackmaschinen oder Waffelbackanlagen verwendet; dabei erfüllen typischerweise miteinander zu einer Kette verbundene gravierte Backplattenpaare oder ein Backband, die/das einen Backofen durchlaufen/durchläuft, die Funktion der Waffeleisen.

Waffelprodukte existieren in einer Vielzahl von Variationen, die sich durch ihre Form und Rezeptur unterscheiden, wobei die Rezeptur insbesondere Einfluss darauf hat, ob die Waffel weich oder knusprig ist.

Bedingt durch ihre Form werden vor allem Flach- und Hohlwaffeln unterschieden. Beispiele für Hohlwaffeln sind Waffeln in Schalenform, in zylindrischer Rollenform, hierin auch als Waffelröllchen bezeichnet, oder in kegelförmiger Tütenform. Allen Waffeln ist dabei gemein, dass sie ein Muster, typischerweise ein Karomuster auf zumindest einer Seite aufweisen, wobei dieses als flaches oder tiefes Muster ausgebildet sein kann.

Eine weitere Form eines Gebäckproduktes ist ein Hippe, welche typischerweise flach und ohne ein Muster wie bspw. ein Karomuster ausgebildet ist und im noch warmen Zustand zu einer Rolle oder einem Hörnchen geformt wird.

Gebäckprodukte wie Hippen und Waffelprodukte, sei es als Flachwaffel oder als Hohlwaffel, können einer weiter Bearbeitung unterzogen werden. Eine verbreitete Form der Bearbeitung, insbesondere bei Waffelröllchen als eine spezielle Form eines Waffelproduktes, besteht darin, das Waffelröllchen teilweise oder vollständig mit einer Schicht wie bspw. einer Schokoladeschicht zu versehen. Darüber hinaus kann bei Waffelröllchen und Hippen die Bearbeitung alternativ oder zusätzlich darin bestehen, diese mit einer Füllmasse zu füllen. Als Füllstoffe werden insbesondere Schokolade und Schokoladencremes verwendet. Flachwaffeln werden dagegen typischerweise zu geschichteten Waffelprodukte verarbeitet.

Die Herstellung von mit einer Füllmasse gefüllten Gebäckprodukten im industriellen Maßstab stellt erhebliche Anforderungen an die Ausgestaltung des Prozesses, um stabile Gebäckprodukte mit hoher Ausbeute, geringem Bruch und definierter Füllung mit einer Füllmasse herzustellen.

Der vorliegenden Erfindung liegt die Aufgabe zu Grunde, ein Verfahren bereitzustellen, das die Produktion von mit einer Füllmasse gefüllten Gebäckprodukten mit hoher Ausbeute und geringem Bruch erlaubt.

Der vorliegenden Erfindung liegt des Weiteren die Aufgabe zu Grunde, ein Verfahren bereitzustellen, das die Produktion von gefüllten Waffelröllchen mit hoher Ausbeute und definierter Füllung erlaubt.

Schließlich liegt der vorliegenden Erfindung die Aufgabe zu Grunde, ein mit einer Füllmasse gefülltes Gebäckprodukt mit einer definierten Füllung bereitzustellen.

Diese und weitere Aufgaben wird erfindungsgemäß gelöst durch den Gegenstand der beigefügten unabhängigen Ansprüche; bevorzugte Ausführungsformen ergeben sich aus den beigefügten abhängigen Ansprüchen.

Die der vorliegenden Erfindung zu Grunde liegenden Aufgaben werden erfindungsgemäß gelöst durch den Gegenstand der beigefügten unabhängigen Ansprüche. Bevorzugte Ausführungsformen ergeben sich aus den ebenfalls beigefügten abhängigen Ansprüchen.

Unabhängig davon werden die der vorliegenden Erfindung zu Grunde liegenden Aufgaben in einem ersten Aspekt, der auch eine erste Ausführungsform des ersten Aspektes ist, gelöst durch ein Verfahren zur Herstellung eines mit einer Füllmasse gefüllten Gebäckproduktes, wobei das Verfahren umfasst Einrollen eines blattförmigen, rollbaren Gebäckteils mittels eines Einrollmittels, wobei durch das Einrollen des blattförmigen, rollbaren Gebäckteils ein mit einem Hohlraum versehenes Gebäckprodukt entsteht und die Wandung des mit einem Hohlraum versehenen Gebäckproduktes zumindest teilweise mehrlagig ausgebildet ist, und Einbringen der Füllmasse durch das Einrollmittel in das Gebäckprodukt.

In einer zweiten Ausführungsform des ersten Aspektes, die auch eine Ausführungsform der ersten Ausführungsform des ersten Aspektes ist, ist vorgesehen, dass das Einbringen der Füllmasse durch das Einrollmittel in das Gebäckprodukt erfolgt durch Auftragen der Füllmasse auf das blattförmige, rollbare Gebäckteil.

In einer dritten Ausführungsform des ersten Aspektes, die auch eine Ausführungsform der ersten Ausführungsform des ersten Aspektes ist, ist vorgesehen, dass das Einbringen der Füllmasse durch das Einrollmittel in das Gebäckprodukt während des Einrollens des blattförmigen, rollbaren Gebäckteils mittels des Einrollmittels erfolgt.

In einer vierten Ausführungsform des ersten Aspektes, die auch eine Ausführungsform der ersten Ausführungsform des ersten Aspektes ist, ist vorgesehen, dass das Einbringen der Füllmasse durch das Einrollmittel in das Gebäckprodukt erfolgt nach Ausbildung des mit einem Hohlraum versehenen Gebäckproduktes.

In einer fünften Ausführungsform des ersten Aspektes, die auch eine Ausführungsform der ersten, zweiten, dritten und vierten Ausführungsform des ersten Aspektes ist, ist vorgesehen, dass die Wandung des mit einem Hohlraum versehenen Gebäckproduktes durch das blattförmige, rollbare Gebäckteil ausgebildet wird.

In einer sechsten Ausführungsform des ersten Aspektes, die auch eine Ausführungsform der ersten, zweiten, dritten, vierten und fünften Ausführungsform des ersten Aspektes ist, ist vorgesehen, dass die Wandung des mit einem Hohlraum versehenen Gebäckproduktes zumindest teilweise doppellagig ausgebildet ist.

In einer siebten Ausführungsform des ersten Aspektes, die auch eine Ausführungsform der ersten, zweiten, dritten, vierten, fünften und sechsten Ausführungsform des ersten Aspektes ist, ist vorgesehen, dass die Wandung des mit einem Hohlraum versehenen Gebäckproduktes über den gesamten Umfang des röhrenförmigen Waffelproduktes mehrlagig ausgebildet ist.

In einer achten Ausführungsform des ersten Aspektes, die auch eine Ausführungsform der ersten, zweiten, dritten, vierten, fünften, sechsten und siebten Ausführungsform des ersten Aspektes ist, ist vorgesehen, dass das blattförmige, rollbare Gebäckteil durchgängig in einer Richtung gerollt wird.

In einer neunten Ausführungsform des ersten Aspektes, die auch eine Ausführungsform der ersten, zweiten, dritten, vierten, fünften, sechsten, siebten und achten Ausführungsform des ersten Aspektes ist, ist vorgesehen, dass das Einrollen das blattförmige, rollbare Gebäckteil in dem mit einem Hohlraum versehenen Gebäckproduktes eine Schleife ausbildet, bevorzugterweise in dem Hohlraum des mit einem Hohlraum versehenen Gebäckproduktes eine Schleife ausbildet.

In einer zehnten Ausführungsform des ersten Aspektes, die auch eine Ausführungsform der neunten Ausführungsform des ersten Aspektes ist, ist vorgesehen, dass die Schleife transient ausgebildet wird und in dem mit einer Füllmasse gefüllten Gebäckprodukt nicht mehr vorhanden ist.

In einer elften Ausführungsform des ersten Aspektes, die auch eine Ausführungsform der neunten Ausführungsform des ersten Aspektes ist, ist vorgesehen, dass die Schleife dauerhaft ausgebildet wird und in dem mit einer Füllmasse gefüllten Gebäckprodukt vorhanden ist.

In einer zwölften Ausführungsform des ersten Aspektes, die auch eine Ausführungsform der ersten, zweiten, dritten, vierten, fünften, sechsten, siebten, achten, neunten, zehnten und elften Ausführungsform des ersten Aspektes ist, ist vorgesehen, dass das Einrollmittel ein Wickeldorn ist.

In einer 13. Ausführungsform des ersten Aspektes, die auch eine Ausführungsform der ersten, zweiten, dritten, vierten, fünften, sechsten, siebten, achten, neunten, zehnten und elften Ausführungsform des ersten Aspektes ist, ist vorgesehen, dass das Einrollmittel eine Zwei-Zinken-Gabel ist oder eine Zwei-Zinken-Gabel umfasst.

In einer 14. Ausführungsform des ersten Aspektes, die auch eine Ausführungsform der ersten, zweiten, dritten, vierten, fünften, sechsten, siebten, achten, neunten, zehnten und elften Ausführungsform des ersten Aspektes ist, ist vorgesehen, dass das Einrollmittel ein oder mehrere Rollen ist oder eine oder mehrere Rollen umfasst.

In einer 15. Ausführungsform des ersten Aspektes, die auch eine Ausführungsform der ersten, zweiten, dritten, vierten, fünften, sechsten, siebten, achten, neunten, zehnten und elften Ausführungsform des ersten Aspektes ist, ist vorgesehen, dass das Einrollmittel ein oder mehrere Bandlappen ist oder einen oder mehrere Bandlappen umfasst.

In einer 16. Ausführungsform des ersten Aspektes, die auch eine Ausführungsform der ersten, zweiten, dritten, vierten, fünften, sechsten, siebten, achten, neunten, zehnten, elften, zwölften, 13., 14. und 15. Ausführungsform des ersten Aspektes ist, ist vorgesehen, dass das Einrollmittel eine oder mehrere Öffnungen umfasst zum Einbringen der Füllmasse.

In einer 17. Ausführungsform des ersten Aspektes, die auch eine Ausführungsform der ersten, zweiten, dritten, vierten, fünften, sechsten, siebten, achten, neunten, zehnten, elften, zwölften, 13., 14., 15. und 16. Ausführungsform des ersten Aspektes ist, ist vorgesehen, dass das Einrollmittel die Füllmasse durch Rotation des Einrollmittels auf das blattförmige, rollbare Gebäckteil aufträgt.

In einer 18. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16. und 17. Ausführungsform des ersten Aspektes ist, ist vorgesehen, dass das Einrollmittel die Füllmasse kontinuierlich in das Gebäckprodukt einbringt.

In einer 19. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16. und 17. Ausführungsform des ersten Aspektes ist, ist vorgesehen, dass das Einrollmittel die Füllmasse diskontinuierlich in das Gebäckprodukt einbringt.

In einer 20. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16., 17., 18. und 19. Ausführungsform des ersten Aspektes ist, ist vorgesehen, dass das Einrollmittel die Füllmasse pulsierend in das Gebäckprodukt einbringt.

In einer 21. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19. und 20. Ausführungsform des ersten Aspektes ist, ist vorgesehen, dass das mit einer Füllmasse gefüllte Gebäckprodukt ein mit einer Füllmasse gefülltes röhrenförmiges Gebäckprodukt ist.

In einer 22. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19. und 20. Ausführungsform des ersten Aspektes ist, ist vorgesehen, dass das mit einer Füllmasse gefülltes Gebäckprodukt ein mit einer Füllmasse gefülltes konusförmiges oder kegelförmiges Gebäckprodukt ist.

In einer 23. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21. und 22. Ausführungsform des ersten Aspektes ist, ist vorgesehen, dass das blattförmige, rollbare Gebäckteil ein Waffelblatt ist.

In einer 24. Ausführungsform des ersten Aspektes, die auch eine Ausführungsform der 23. Ausführungsform des ersten Aspektes ist, ist vorgesehen, dass das Waffelblatt auf einer Trommel oder einem Backband gebacken wird.

In einer 25. Ausführungsform des ersten Aspektes, die auch eine Ausführungsform der 23. und 24. Ausführungsform des ersten Aspektes ist, ist vorgesehen, dass das Waffelblatt auf einer Trommel oder einem Backband vor dem Einrollen des Waffelblattes mittels des Einrollmittels gebacken wird.

In einer 26. Ausführungsform des ersten Aspektes, die auch eine Ausführungsform der 23., 24. und 25. Ausführungsform des ersten Aspektes ist, ist vorgesehen, dass das Einrollen des Waffelblattes senkrecht zur Backrichtung erfolgt.

In einer 27. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24., 25. und 26. Ausführungsform des ersten Aspektes, bevorzugterweise der 23., 24., 25. und 26. Ausführungsform des ersten Aspektes ist vorgesehen, dass das mit einer Füllmasse gefüllte Gebäckprodukt ein mit einer Füllmasse gefülltes Waffelprodukt ist.

In einer 28. Ausführungsform des ersten Aspektes, die auch eine Ausführungsform der 27. Ausführungsform des ersten Aspektes ist, ist vorgesehen, dass das mit einer Füllmasse gefüllte Gebäckprodukt ein mit einer Füllmasse gefülltes röhrenförmiges Waffelprodukt ist.

In einer 29. Ausführungsform des ersten Aspektes, die auch eine Ausführungsform der 28. Ausführungsform des ersten Aspektes ist, ist vorgesehen, dass das mit einer Füllmasse gefüllte röhrenförmige Waffelprodukt ein mit einer Füllmasse gefülltes Waffelröllchen ist.

In einer 29. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24., 25. und 26. Ausführungsform des ersten Aspektes, bevorzugterweise der 23., 24., 25. und 26. Ausführungsform des ersten Aspektes ist vorgesehen, dass das mit einer Füllmasse gefüllte Gebäckprodukt eine mit einer Füllmasse gefüllte Waffelhippe ist.

In einer 30. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24., 25., 26., 27., 28. und 29. Ausführungsform des ersten Aspektes ist, ist vorgesehen, dass das blattförmige, rollbare Gebäckteil aus einer Mehrzahl von blattförmigen, rollbaren Teilgebäckteilen besteht, wobei ein jedes blattförmige, rollbare Teilgebäckteil der Mehrzahl von blattförmigen, rollbaren Teilgebäckteilen mit mindestens einem weiteren blattförmigen, rollbaren Teilgebäckteil der Mehrzahl von blattförmigen, rollbaren Teilgebäckteilen verbunden ist, und ein jedes der Mehrzahl von blattförmigen, rollbaren Teilgebäckteilen mittels eines Einrollmittels eingerollt wird, wobei durch das Einrollen des blattförmigen, rollbaren Teilgebäckteils jeweils ein mit einem Hohlraum versehenes Teilgebäckprodukt entsteht und die Wandung des mit einem Hohlraum versehenen Teilgebäckproduktes zumindest teilweise mehrlagig ausgebildet ist, und die Füllmasse durch das Einrollmittel in das jeweilige Teilgebäckprodukt eingebracht wird.

In einer 31. Ausführungsform des ersten Aspektes, die auch eine Ausführungsform der 30. Ausführungsform des ersten Aspektes ist, ist vorgesehen, dass ein jedes blattförmige, rollbare Teilgebäckteil der Mehrzahl von blattförmigen, rollbaren Teilgebäckteilen mit mindestens einem weiteren blattförmigen, rollbaren Teilgebäckteil der Mehrzahl von blattförmigen, rollbaren Teilgebäckteile mit einem Steg verbunden ist.

In einer 32. Ausführungsform des ersten Aspektes, die auch eine Ausführungsform der 31. Ausführungsform des ersten Aspektes ist, ist vorgesehen, dass das Material des Steges identisch ist zu dem Material der Mehrzahl von blattförmigen, rollbaren Teilgebäckteilen.

In einer 33. Ausführungsform des ersten Aspektes, die auch eine Ausführungsform der 30., 31. und 32. Ausführungsform des ersten Aspektes ist, ist vorgesehen, dass das Einrollen der Mehrzahl von blattförmigen, rollbaren Teilgebäckteilen durch ein Einrollmittel erfolgt.

In einer 34. Ausführungsform des ersten Aspektes, die auch eine Ausführungsform der 30., 31. und 32. Ausführungsform des ersten Aspektes ist, ist vorgesehen, dass das Einrollen der Mehrzahl von blattförmigen, rollbaren Teilgebäckteilen durch eine Vielzahl von Einrollmitteln erfolgt.

In einer 35. Ausführungsform des ersten Aspektes, die auch eine Ausführungsform der 33., und 34. Ausführungsform des ersten Aspektes ist, ist vorgesehen, dass das Einrollen der Mehrzahl von blattförmigen, rollbaren Teilgebäckteilen sukzessiv oder sequentiell erfolgt.

In einer 36. Ausführungsform des ersten Aspektes, die auch eine Ausführungsform der 33., und 34. Ausführungsform des ersten Aspektes ist, ist vorgesehen, dass das Einrollen der Mehrzahl von blattförmigen, rollbaren Teilgebäckteilen parallel erfolgt.

In einer 37. Ausführungsform des ersten Aspektes, die auch eine Ausführungsform der 30., 31., 32., 33., 34., 35. und 36. Ausführungsform des ersten Aspektes ist, ist vorgesehen, dass das mit einer Füllmasse gefüllte Gebäckprodukt aus einer Mehrzahl von mit einer Füllmasse gefüllten Teilgebäckprodukte besteht, wobei die mit einer Füllmasse gefüllten Teilgebäckprodukte der Mehrzahl von mit einer Füllmasse gefüllten Teilgebäckprodukte miteinander verbunden sind.

In einer 38. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24., 25., 26., 27., 28., 29., 30., 31., 32., 33., 34., 35., 36. und 37. Ausführungsform des ersten Aspektes ist, ist vorgesehen, dass das Füllmittel ausgewählt ist aus der Gruppe umfassend Schokolade, Schokoladencreme, Gelee, fettbasierte Füllung, fruchtbasierte Füllung, würzige Pasten und Käsezubereitungen.

In einer 39. Ausführungsform des ersten Aspektes, die auch eine Ausführungsform der ersten, zweiten, dritten, vierten, fünften, sechsten, siebten, achten, neunten, zehnten, elften, zwölften, 13., 14., 15., 16., 17., 18., 19., 20., 21., 22., 23., 24., 25., 26., 27., 28., 29., 30., 31., 32., 33., 34., 35., 36., 37. und 38. Ausführungsform des ersten Aspektes ist, ist vorgesehen, dass das Verfahren weiter umfasst Komprimieren des durch Einrollen des blattförmigen, rollbaren Gebäckteils erhaltenen, mit einem Hohlraum versehenen Gebäckproduktes, in das die Füllmasse durch das Einrollmittel eingebracht ist.

In einer 40. Ausführungsform des ersten Aspektes, die auch eine Ausführungsform der 39. Ausführungsform des ersten Aspektes ist, ist vorgesehen, dass das Komprimieren über die gesamte Längsachse des mit einem Hohlraum versehenen Gebäckproduktes erfolgt.

In einer 41. Ausführungsform des ersten Aspektes, die auch eine Ausführungsform der 40. Ausführungsform des ersten Aspektes ist, ist vorgesehen, dass das Komprimieren über einen Teil der Längsachse des mit einem Hohlraum versehenen Gebäckproduktes erfolgt.

In einer 42. Ausführungsform des ersten Aspektes, die auch eine Ausführungsform der 40. Ausführungsform des ersten Aspektes ist, ist vorgesehen, dass das Komprimieren über die gesamte Querachse des mit einem Hohlraum versehenen Gebäckproduktes erfolgt.

In einer 43. Ausführungsform des ersten Aspektes, die auch eine Ausführungsform der 40. Ausführungsform des ersten Aspektes ist, ist vorgesehen, dass das Komprimieren über einen Teil der Querachse des mit einem Hohlraum versehenen Gebäckproduktes erfolgt.

In einer 44. Ausführungsform des ersten Aspektes, die auch eine Ausführungsform der 40., 41., 42. und 43. Ausführungsform des ersten Aspektes ist, ist vorgesehen, dass das erhaltene, mit einer Füllmasse gefüllte Gebäckprodukt eine Sandwichstruktur aufweist.

Unabhängig davon werden die der vorliegenden Erfindung zu Grunde liegenden Aufgaben in einem zweiten Aspekt, der auch eine erste Ausführungsform des zweiten Aspektes ist, gelöst durch ein Gebäckprodukt, erhältlich durch ein Verfahren nach dem ersten Aspekt, einschließlich einer jeden Ausführungsform davon, insbesondere der ersten, zweiten, dritten, vierten, fünften, sechsten, siebten, achten, neunten, zehnten, elften, zwölften, 13., 14., 15., 16., 17., 18., 19., 20., 21., 22., 23., 24., 25., 26., 27., 28., 29., 30., 31., 32., 33., 34., 35., 36., 37., 38., 39., 40., 41., 42., 43. und 44. Ausführungsform des ersten Aspektes.

In einer zweiten Ausführungsform des zweiten Aspektes, die auch eine Ausführungsform der ersten Ausführungsform des zweiten Aspektes ist, ist vorgesehen, dass das Gebäckprodukt ein Waffelprodukt ist.

In einer dritten Ausführungsform des zweiten Aspektes, die auch eine Ausführungsform der ersten und zweiten Ausführungsform des zweiten Aspektes ist, ist vorgesehen, dass das Gebäckprodukt ein röhrenförmiges Waffelprodukt ist.

In einer vierten Ausführungsform des zweiten Aspektes, die auch eine Ausführungsform der ersten Ausführungsform des zweiten Aspektes ist, ist vorgesehen, dass das Waffelprodukt eine Waffelhippe ist.

In einer fünften Ausführungsform des zweiten Aspektes, die auch eine Ausführungsform der ersten, zweiten, dritten und vierten Ausführungsform des zweiten Aspektes ist, insbesondere der ersten Ausführungsform des zweiten Aspektes ist, ist vorgesehen, dass das Gebäckprodukt eine Sandwichstruktur aufweist. Bevorzugterweise ist dabei eine Sandwichstruktur eine solche, bei der zumindest eine Lage aus der Füllmasse zwischen zumindest zwei Lagen eines oder des blattförmigen, rollbaren Gebäckteils, bevorzugtererweise zwischen zumindest zwei Lagen eines oder des gerollten blattförmigen, rollbaren Gebäckteils angeordnet ist.

In einer sechsten Ausführungsform des zweiten Aspektes, die auch eine Ausführungsform der ersten, zweiten, dritten, vierten und fünften Ausführungsform des zweiten Aspektes ist, ist vorgesehen, dass das Gebäckprodukt aus einer Mehrzahl von mit einer Füllmasse gefüllten Teilgebäckprodukten besteht, wobei mindestens eines der mit einer Füllmasse gefüllten Teilgebäckprodukte der Mehrzahl von mit einer Füllmasse gefüllten Teilgebäckprodukten mit mindestens einem weiteren mit einer Füllmasse gefüllten Teilgebäckprodukten der Mehrzahl von mit einer Füllmasse gefüllten Teilgebäckprodukten verbunden ist.

Die vorliegenden Erfinder haben festgestellt, dass mit dem erfindungsgemäßen Verfahren ein mit einer Füllmasse gefülltes, zumindest teilweise mehrlagig ausgebildetes Gebäckprodukt, wie bspw. ein Waffelprodukt, einschließlich aber nicht darauf beschränkt ein röhrenförmiges Waffelprodukt wie ein Waffelröllchen, hergestellt werden kann, das eine definierte Füllung aufweist. Des Weiteren haben die vorliegenden Erfinder festgestellt, dass mit dem erfindungsgemäßen Verfahren, insbesondere im industriellen Maßstab, ein mit einer Füllmasse gefülltes Gebäckprodukt wie bspw. ein Waffelprodukt, einschließlich aber nicht darauf beschränkt, ein röhrenförmiges Waffelprodukt wie ein Waffelröllchen mit geringem Bruch hergestellt werden kann.

Die vorliegenden Erfinder gehen, ohne darauf festgelegt sein zu wollen, davon aus, dass bedingt durch die zumindest teilweise mehrlagig ausgebildete Wandung des mit einem Hohlraum versehenen Gebäckproduktes das Einbringen der Füllmasse durch das Einrollmittel in das Gebäckprodukt vorteilhaft ausgestaltet werden kann. Eine derartige vorteilhafte Ausgestaltung kann darin bestehen, dass bedingt durch die höhere mechanische Stabilität des einen Hohlraum aufweisenden Gebäckproduktes das Einbringen der Füllmasse in das Gebäckprodukt mit einem höheren Druck bzw. einem höheren Druckimpuls erfolgen kann, ohne dass es zu einer Zerstörung des Gebäckproduktes und damit zu einem höheren Bruch bei der insbesondere industriellen Herstellung des mit einer Füllmasse gefüllten Gebäckproduktes kommt. Eine weitere vorteilhafte Ausgestaltung kann darin bestehen, dass bedingt durch die höhere mechanische Stabilität des einen Hohlraum aufweisenden Gebäckproduktes bei dem Einbringen der Füllmasse in das Gebäckprodukt durch das Einrollmittel die Abstimmungsgenauigkeit zwischen, zum einen, dem Einrollen und/oder - relativen - Zurückziehen des Einrollmittels von dem einen Hohlraum aufweisenden Gebäckteil bzw. Gebäckproduktes und, zum anderen, dem Einfüllen der Füllmasse in das Gebäckteil bzw. Gebäckprodukt und insbesondere in den Hohlraum des mit einem Hohlraum versehenen Gebäckproduktes nicht so hoch ausgeführt sein muss, was wiederum zu einer Verringerung des Bruches des Gebäckproduktes führt bzw. zu einer präziseren Einbringung der Füllmasse bei einem ansonsten gleichbleibenden Produktionstakt. Mit anderen Worten, das erfindungsgemäß Verfahren erlaubt eine schnelle Herstellung eines mit einer Gebäckfüllung gefüllten Gebäckproduktes, ohne dass die Herstellungsgeschwindigkeit durch den Füllvorgang signifikant verringert werden muss.

Wie hierin bevorzugt verwendet bezeichnet der Begriff "definierte Füllung" eine Füllung, die wenigstens eines der folgenden Merkmale aufweist.
(1) Die Füllung weist, in Längsrichtung, an beiden Enden einen definierten Endpunkt auf; der definierte Endpunkt ist dabei bevorzugterweise ein solcher, bei dem, in Längsrichtung, die Kante der Füllung einen definierten Abstand zu dem korrespondierenden Ende aufweist oder mit diesem fluchtet, insbesondere bündig ist. In einer bevorzugten Ausführungsform ist vorgesehen, dass der definierte Abstand zu zumindest einem Ende, bevorzugterweise beiden Enden des Gebäckproduktes, über den gesamten Umfang des Gebäckproduktes konstant ist. In einer alternativen Ausführungsform ist vorgesehen, dass, in Längsrichtung, zumindest eine Kante der Füllung mit dem korrespondierenden Ende des Gebäckproduktes fluchtet, bevorzugterweise fluchten beide Kanten der Füllung mit den korrespondierenden Enden des Gebäckproduktes.
(2) Die Füllung, sofern sie nicht den Hohlraum des Gebäckproduktes vollständig ausfüllt, weist, über die gesamte Länge des Gebäckproduktes eine über den Umfang des Gebäckproduktes konstante Stärke auf.
(3) Die Füllung, sofern sie, in Umfangsrichtung des Gebäckproduktes, den Hohlraum des Gebäckproduktes vollständig ausfüllt, bildet, in Längsrichtung, an zumindest einem Ende des Gebäckproduktes eine Stirnfläche aus, wobei die Stirnfläche senkrecht zur Längsachse des Gebäckproduktes angeordnet ist; bevorzugterweise bildet die Füllung, in Längsrichtung, an beiden Enden des Gebäckproduktes jeweils eine Stirnfläche aus, die senkrecht zur Längsachse des Gebäckproduktes angeordnet sind.

In einer Ausführungsform des erfindungsgemäßen Verfahrens ist vorgesehen, dass die Füllung mit den beiden Stirnkanten des Gebäckproduktes bündig abschließt. In einer bevorzugten Ausführungsform ist das Gebäckprodukt ein Waffelröllchen.

Wie hierin bevorzugt verwendet bezeichnet der Begriff "Bruch" ein Produkt bei der Herstellung von Gebäckprodukten wie bspw. Waffelröllchen ausgehend von einem blattförmigen, rollbaren Gebäckteil, welches nicht verkaufsfähig ist. Ein nicht verkaufsfähiges Gebäckprodukt ist ein solches, welches zumindest einen der folgenden Mängel aufweist: Das Produkt weist nicht die erwünschte Form auf, bspw. im Falle eines Waffelröllchens zeigt dieses zumindest nicht über seine gesamte Längsachse die erwünschte Röllchenform auf; die Wandstärke des Gebäckproduktes ist nicht über die gesamte Länge der Längsachse gleichmäßig ausgebildet; das Gebäckprodukt ist nicht zumindest teilweise mehrlagig ausgebildet; das Gebäckprodukt weist eine Länge in der Längsachse auf, die nicht der erforderlichen Länge bzw. Spezifikation entspricht; der Außendurchmesser des Gebäckproduktes entspricht nicht der Spezifikation und ist insbesondere entweder zu groß oder zu klein; der Innendurchmesser des Gebäckproduktes entspricht nicht der Spezifikation und ist insbesondere entweder zu groß oder zu klein; der Außendurchmesser des Gebäckproduktes entspricht nicht über die gesamte Länge des Waffelröllchens der Spezifikation und ist insbesondere entweder zu groß oder zu kein

Bei dem erfindungsgemäßen Verfahren zur Herstellung eines gefüllten Gebäckproduktes gemäß der vorliegenden Erfindung ist vorgesehen, dass das gefüllte Gebäckprodukt hergestellt wird durch Einrollen eines blattförmigen, rollbaren Gebäckteils mittels eines Einrollmittels, wobei durch das Einrollen ein röhrenförmiges Gebäckprodukt entsteht und die Wandung des röhrenförmigen Gebäckproduktes zumindest teilweise mehrlagig ausgebildet ist. In einer Ausführungsform ist vorgesehen, dass durch das Einrollen in dem röhrenförmigen Gebäckprodukt durch das blattförmige, rollbare Gebäckteil ein Hohlraum definiert wird, der durch die Innenseite des eingerollten blattförmigen, rollbaren Gebäckteils begrenzt wird. Gemäß einer Ausführungsform ist das gefüllte Gebäckprodukt ein gefülltes röhrenförmiges Waffelprodukt, und bevorzugterweise ist das gefüllte röhrenförmige Waffelprodukt ein gefülltes Waffelröhrchen oder eine gefüllte Waffelhippe. Es ist im Rahmen der vorliegenden Erfindung, dass die Offenbarung betreffend ein gefülltes Waffelröhrchen auch eine solche betreffend eine gefüllte Waffelhippe ist, und umgekehrt. Es ist ebenfalls im Rahmen der vorliegenden Erfindung, dass die Offenbarung betreffend ein gefülltes Waffelröllchen oder eine gefüllte Waffelhippe gleichermaßen eine solche betreffend ein mit einer Füllmasse gefülltes Gebäckprodukt ist. Im Rahmen der vorliegenden Anmeldung werden die Begriffe mit einer Füllmasse gefülltes Gebäckprodukt und gefülltes Gebäckprodukt synonym verwendet.

In eine Ausführungsform ist vorgesehen, dass das Waffelprodukt ein Muster ausweist; das Muster kann ein flaches oder ein tiefes Muster sein. Das Muster selbst kann entsprechend einer Produktspezifikation ausgebildet sein, bspw. als Karomuster.

Gemäß der vorliegenden Erfindung wird das gefüllte Gebäckprodukt, welches hierin auch als gerolltes, gefülltes Gebäckteil bezeichnet ist, durch Einrollen eines blattförmigen, rollbaren Gebäckteils mittels eines Einrollmittels hergestellt, wobei die Wandung des Gebäckproduktes aus dem blattförmigen, rollbaren Gebäckteil besteht oder aus diesem hergestellt ist und zumindest teilweise mehrlagig ausgebildet ist. In einer Ausführung ist vorgesehen, dass die teilweise mehrlagige Ausbildung der Wandung des Gebäckproduktes über einen Teil des Umfanges der Wandung des gerollten, gefüllten Gebäckproduktes ausgebildet ist. In einer Ausführungsform ist vorgesehen, dass das Ausmaß der Überlappung und damit der Umfang der Mehrlagigkeit so ist, dass eine stabile Verbindung der zwei oder mehreren Lagen erfolgt und das gerollte Gebäckteil in der gerollten Form erhalten bleibt. Bevorzugterweise bleibt das gerollte Gebäckteil in der gerollten Form erhalten, ohne dass es hierzu einer von außen an das gerollte Gebäckteil angelegten Kraft bedarf. In einer Ausführungsform ist vorgesehen, dass der Teil des Umfanges der Wandung, der mehrlagig ausgebildet ist, so wenig wie 1% und so viel wie 100% betragen kann, wobei im letzteren Fall die Wandung in ihrem gesamten Umfang mehrlagig ausgebildet ist. In einer Ausführungsform ist vorgesehen, dass der Teil des Umfanges der Wandung, die mehrlagig ausgebildet ist, 5%, 10%, 15%, 20%, 25%, 30%, 35%, 40%, 45%, 50%, 55%, 60%, 65%, 70%, 75%, 80%, 85%, 90% oder 95% beträgt.

In einer Ausführungsform ist vorgesehen, dass die zumindest teilweise mehrlagige Ausbildung der Wandung des gerollten, gefüllten Gebäckproduktes eine zumindest teilweise zweilagige Ausbildung der Wandung des gerollten, gefüllten Gebäckproduktes ist. In einer alternativen Ausführungsform ist vorgesehen, dass die zumindest teilweise mehrlagige Ausbildung der Wandung des gerollten, gefüllten Gebäckproduktes eine zumindest teilweise dreilagige, vierlagige, fünflagige, sechslagige, siebenlagige, achtlagige, neunlagige, zehnlagige oder darüberhinausgehende mehrlagigeAusbildung der Wandung des gerollten, gefüllten Gebäckproduktes ist. In einer bevorzugten Ausführungsform ist die Wandung zumindest zweilagig, dreilagig oder vierlagig ausgebildet.

In einer Ausführungsform ist vorgesehen, dass durch Einrollen des blattförmigen, rollbaren Gebäckteils in dem - erhaltenen - gerollten, gefüllten Gebäckprodukt eine Schleife ausgebildet wird. Das Ausmaß der Schleifenbildung wird, wie von den Fachleuten anerkannt wird, u.a. bestimmt durch die Art des Einrollens des blattförmigen, rollbaren Gebäckteils, wobei die Art des Einrollmittels ebenso wie die Geschwindigkeit des Einrollens und das Zuführen des blattförmigen, rollbaren Gebäckteils zu dem Einrollmittel von Bedeutung sind oder von Bedeutung sein können.. In Ausführungsformen ist vorgesehen, dass die Länge der Schleife weniger als den halben Durchmesser, den halben Durchmesser oder mehr als den halben Durchmesser des definierten Hohlraumes des gerollten, gefüllten Gebäckproduktes beträgt.

In einer Ausführungsform ist vorgesehen, dass die Schleife nach Herstellung des gerollten, gefüllten röhrenförmigen Gebäckproduktes und insbesondere nach dem Abkühlen auf Raumtemperatur noch vorhanden ist, insbesondere mit dem unbewaffneten Auge oder dem bloßen Auge,in dem abgekühlten röhrenförmigen Waffelprodukt sichtbar ist. In einer alternativen Ausführungsform ist vorgesehen, dass die Schleife nach Herstellung des gerollten, gefüllten Gebäckproduktes und insbesondere nach dem Abkühlen auf Raumtemperatur also solches noch vorhanden ist, jedoch an einem Teil der Innenseite, d.h. der dem Hohlraum des gerollten, gefüllten Gebäckproduktes zugewandten Seite der Wandung des gerollten, gefüllten Gebäckproduktes aufliegt; dabei kann die aufliegende Schleife eine Verdickung der Wandung ausbilden und/oder als Schleife als solches nicht mehr ersichtlich oder erkennbar sein, insbesondere nicht mit den bloßen Auge erkennbar sein. Letzteres wird bevorzugterweise dadurch erreicht, dass die Schleife mechanisch bei dem noch heißen gerollten Gebäckprodukt zur Seite, d.h. an die Wandung gedrückt wird, bevorzugterweise bevor die Füllmasse in das gerollte Gebäckprodukt eingebracht wird. Alternative kann die Lageverschiebung der Schleife durch das Einbringen der Füllmasse in den Hohlraum des gerollten Gebäckproduktes erfolgen, wobei die Lageverschiebung so weitreichend sein kann, dass die Schleife an der Wandung vollständig oder teilweise anliegt. Es ist im Rahmen einer Ausführungsform, dass die Schleife mit der Wandung des röhrenförmigen Waffelproduktes fest verbunden, bevorzugterweise verbackt ist.

Gemäß der vorliegenden Erfindung ist vorgesehen, dass das gerollte, gefüllte Gebäckprodukt mit einer Füllmasse gefüllt ist. Die Füllmasse befindet sich innerhalb des gerollten Gebäckproduktes und bevorzugterweise in dem Hohlraum des gerollten Gebäckproduktes. In Abhängigkeit von dem Füllzustand des gerollten Gebäckproduktes mit der Füllmasse kann die Schleife noch mit dem unbewaffneten oder dem bloßen Auge sichtbar sein oder aber auf der Innenseite der Wandung des gerollten Gebäckproduktes aufliegen; dabei ist es im Rahmen der vorliegenden Erfindung, dass die Schleife mit der Wandung verbackt und somit, abhängig von der Wandstärke des Waffelblattes mehr oder weniger zu einer Erhöhung der Stärke des Waffelblattes führt kann.

Die Herstellung des erfindungsgemäß verwendeten blattförmigen, rollbaren Gebäckteils ist gemäß im Stand der Technik bekannten Verfahren möglich. Gleiches gilt für das Backen des blattförmigen, rollbaren Gebäckteils, welches dann dem Einrollen mittels eines Einrollmittels gemäß der vorliegenden Erfindung unterzogen wird. Beispielhaft sei hier auf eine Backtrommel oder ein Backband verwiesen.

In einer Ausführungsform ist vorgesehen, dass das Einrollen des blattförmigen, rollbaren Gebäckteils senkrecht zur Backrichtung erfolgt. In einer Ausführungsform ist vorgesehen, dass das Einrollen des blattförmigen, rollbaren Gebäckteils parallel zur Backrichtung erfolgt. Die Backrichtung wie hierin verwendet ist bevorzugterweise jene Richtung, die durch den Austritt des blattförmigen, rollbaren Gebäckteils aus der Bockvorrichtung definiert ist.

In einer Ausführungsform umfasst das Einrollmittel einen Wickeldorn. In einer Ausführungsform der Erfindung, bei der das gerollte, gefüllte Gebäckprodukt mit einer Füllmasse gefüllt ist, umfasst der Wickeldorn mindestes eine Öffnung, durch die die Füllmasse auf das blattförmige, rollbare Gebäckteil aufgetragen wird. Das Auftragen erfolgt dabei auf die Seite des blattförmigen, rollbaren Gebäckteils, welche nach dem Einrollen den Hohlraum des gerollten Gebäckproduktes definiert. Das Auftragen der Füllmasse auf das blattförmige, rollbare Gebäckteil durch den Wickeldorn kann während des Einrollens des blattförmigen, rollbaren Gebäckteils mittels des Wickeldorns erfolgen. Bevorzugterweise rotiert dabei der Wickeldorn. Alternativ kann das Auftragen der Füllmasse auf das blattförmige, rollbare Gebäckteil durch den Wickeldorn nach dem Einrollen des blattförmigen, rollbaren Gebäckteils mittels des Wickeldorns erfolgen; in einer bevorzugten Ausführungsform davon wird die Füllmasse in den Hohlraum des gerollten Gebäckproduktes eingefüllt, während der Wickeldorn aus dem gerollten Gebäckprodukt entfernt, bspw. zurückgezogen wird; in einer dazu alternativen bevorzugten Ausführungsform wird die Füllmasse in den Hohlraum des gerollten Gebäckproduktes durch den Wickeldorn eingefüllt, nachdem der Wickeldorn aus dem gerollten Gebäckprodukt so weit entfernt bzw. zurückgezogen ist, dass sich eine oder mehrere der einen oder mehreren Öffnungen des Wickeldorns, aus der/denen die Füllmasse austreten kann, noch in dem gerollten Gebäckprodukt befindet/befinden oder soweit davor angeordnet sind, dass die Füllmasse in das gerollte Gebäckprodukt noch eingebracht werden kann.

In einer Ausführungsform umfasst das Einrollmittel eine Zwei-Zinken-Gabel. In einer Ausführungsform umfasst die Zwei-Zinken-Gabel mindestes eine Öffnung, durch die die Füllmasse auf das blattförmige, gerollte Gebäckteil aufgetragen oder in das gerollte Gebäckprodukt eingetragen wird. Das Eintragen der Füllmasse entspricht dabei demjenigen, wie vorstehend für die Verwendung eines Wickeldorns als Einrollmittel offenbart, wobei diese Offenbarung durch Bezugnahme hierin aufgenommen ist. In einer Ausführungsform wird derjenige Zinken der Zwei-Zinken-Gabel so auf den Teil bzw. die Seite des blattförmigen, rollbaren Gebäckteils platziert, der/die die Begrenzung des Hohlraumes des gerollten Gebäckproduktes ausbildet und anschließend das Füllmaterial analog zu den Ausführungsformen des Wickeldorns aufgebracht bzw. eingebracht. Der mindestens eine mit einer Öffnung versehene Zinken der Zwei-Zinken-Gabel entspricht funktional dem mit einer Öffnung versehenen Wickeldorn. Entsprechend erfolgt dabei das Auftragen auf die Seite des blattförmigen, rollbaren Gebäckteils, welche nach dem Einrollen den Hohlraum des gerollten Gebäckproduktes definiert. Das Auftragen der Füllmasse auf das blattförmige, rollbare Gebäckteil durch die Zwei-Zinken-Gabel kann während des Einrollens des blattförmigen, rollbaren Gebäckteils mittels der Zwei-Zinken-Gabel erfolgen. Bevorzugterweise rotiert dabei die Zwei-Zinken-Gabel und insbesondere der mit einer oder mehreren Öffnungen versehene Zinken der Zwei-Zinken-Gabel. Alternative kann das Auftragen der Füllmasse auf das blattförmige, rollbare Gebäckteil durch die Zwei-Zinken-Gabel nach dem Einrollen des blattförmigen, rollbaren Gebäckteils mittels der Zwei-Zinken-Gabel erfolgen; in einer bevorzugten Ausführungsform davon wird die Füllmasse in den Hohlraum des gerollten Gebäckproduktes eingefüllt, während die Zwei-Zinken-Gabel aus dem gerollten Gebäckprodukt entfernt, bspw. zurückgezogen wird; in einer dazu alternativen bevorzugten Ausführungsform wird die Füllmasse in den Hohlraum des gerollten Gebäckproduktes durch die Zwei-Zinken-Gabel eingefüllt, nachdem die Zwei-Zinken-Gabel aus dem gerollten Gebäckprodukt so weit entfernt bzw. zurückgezogen ist, dass sich eine oder mehrere der einen oder mehreren Öffnungen der Zwei-Zinken-Gabel, aus der/denen die Füllmasse austreten kann, noch in dem gerollten Gebäckprodukt befindet/befinden oder soweit davor angeordnet sind, dass die Füllmasse in das gerollte Gebäckprodukt noch eingebracht werden kann. In einer Ausführungsform ist vorgesehen, dass derjenige Zinken der Zwei-Zinken-Gabel zumindest eine Öffnung zum Austritt der Füllmasse aufweist, der sich in den Hohlraum des gerollten Gebäckproduktes befindet, der sich darin befinden wird oder der diejenige Seite des blattförmigen rollbaren Gebäckteils kontaktiert, die eine Innenseite, d.h. dem Hohlraum des gerollten Gebäckproduktes zugewandte Seite darstellt.

In einer Ausführungsform umfasst das Einrollmittel eine oder mehrere Rollen. In einer Ausführungsform der Erfindung umfasst die Rolle oder zumindest eine der Rollen mindestes eine Öffnung, durch die die Füllmasse auf das blattförmige, rollbare Gebäckteil aufgetragen wird. Das Auftragen erfolgt dabei auf die Seite des blattförmigen, rollbaren Gebäckteils, welche nach dem Einrollen den Hohlraum des gerollten Gebäckproduktes definiert bzw. nach innen begrenzt. Bevorzugterweise erfolgt das Auftragen der Füllmasse auf das blattförmige, rollbare Gebäckteil durch die eine oder mehreren Rollen während des Einrollens des blattförmigen, rollbaren Gebäckteils mittels der einen oder mehreren Rollen. In einer Ausführungsform ist vorgesehen, dass das Einrollmittel zumindest zwei Rollen umfasst, wobei eine Rolle das Einrollen, bevorzugterweise das Umschlagen des blattförmigen, rollbaren Gebäckteils vornimmt, während die andere der zwei Rollen die Füllmasse auf das Waffelblatt aufträgt und auf der Seite des blattförmigen, rollbaren Gebäckteils läuft bzw. geführt wird, die nach dem Einrollen des Hohlraum des gerollten Gebäckproduktes definiert bzw. nach innen begrenzt.

In einer Ausführungsform umfasst das Einrollmittel ein oder mehrere Bandlappen. [In einer Ausführungsform der Erfindung umfasst der Bandlappen oder zumindest einer der Bandlappen mindestes eine Öffnung, durch die die Füllmasse auf das blattförmige, rollbare Gebäckteil aufgetragen wird. Das Auftragen erfolgt dabei auf die Seite des blattförmigen, rollbaren Gebäckteils, welche nach dem Einrollen den Hohlraum des gerollten Gebäckproduktes definiert bzw. nach innen begrenzt. Bevorzugterweise erfolgt das Auftragen der Füllmasse auf das blattförmige, rollbare Gebäckteil durch den einen oder mehrere Bandlappen während des Einrollens des blattförmigen, rollbaren Gebäckteils mittels der einen oder mehreren Rollen. In einer Ausführungsform ist vorgesehen, dass das Einrollmittel zumindest zwei Bandlappen umfasst, wobei ein Bandlappen das Einrollen, bevorzugterweise das Umschlagen des Waffelblattes vornimmt, während der andere der zwei Bandlappen die Füllmasse auf das Waffelblatt aufträgt. In einer Ausführungsform ist vorgesehen, dass der eine oder mehrere Bandlappen funktionell gleichartig ist zu der einen oder mehreren Rollen, wie sie als Einrollmittel in einer Ausführungsform der Erfindung vorgesehen sind.

In einer weiteren Ausführungsform der vorliegenden Erfindung ist vorgesehen, dass das Einrollmittel ein Dosierungsmittel ausweist, die das kontaktlose Aufbringen der Füllmasse auf das blattförmige, rollbare Gebäckteil und/oder das kontaktlose Einbringen der Füllmasse in das gerollte Gebäckprodukt erlaubt. In einer bevorzugten Ausführungsform ist vorgesehen, dass das Dosierungsmittel eine Düse, ein Injektor oder ein Depositor ist. In einer Ausführungsform ist vorgesehen, dass das Einrollmittel und das Mittel einstückig ausgebildet sind. In einer alternativen Ausführungsform ist vorgesehen, dass das Einrollmittel und das Mittel mehrstückig ausgebildet sind.

Es ist im Rahmen der vorliegenden Erfindung, dass mehr als ein Einrollmittel verwendet wird. In einer Ausführungsform ist vorgesehen, dass zwei oder mehr Einrollmittel verwendet werden, die bevorzugterweise ausgewählt sind aus der Gruppe umfassend einen Wickeldorn, eine Zwei-Zinken-Gabel, eine oder mehrere Rollen, und einen oder mehrere Bandlappen. In einer weiteren Ausführungsform ist vorgesehen, dass bei Verwendung von zwei oder mehreren Einrollmitteln ein Einrollmittel ein oder mehrere Öffnungen aufweist, durch die die Füllmasse auf das Waffelblatt aufgebracht wird und/oder die die Füllmasse in das röhrenförmige Waffelprodukt eingebracht wird.

Für röhrenförmige Waffelprodukte geeignete Füllmassen sind den Fachleuten auf dem Gebiet bekannt. Funktional ist eine erfindungsgemäß zu verwendende Füllmasse eine solche, die in das Gebäckprodukt im Rahmen des erfindungsgemäßen Verfahrens eingebracht werden kann. Dabei ist bevorzugt, wenn die Füllmasse eine Mindestdichte von 500 g/l aufweist. Gemäß der vorliegenden Erfindung ist die gemäß der Erfindung verwendbare Füllmasse bevorzugterweise ausgewählt aus der Gruppe umfassend Schokolade, Schokoladenmassen, fettbasierte Füllungen, fruchtbasierte Füllungen Pasten, würzige Pasten, Weichkäse wie bspw. Schmelzkäsemassen, und Marshmallowmassen.

Es ist im Rahmen des erfindungsgemäßen Verfahrens, dass dieses weitere Schritte umfasst. In einer Ausführungsform ist vorgesehen, dass das Verfahren einen Schritt umfasst, bei dem die gerollte Gebäckprodukte eingefettet wird.

In einer weiteren Ausführungsform des erfindungsgemäßen Verfahrens ist vorgesehen, dass diese den Schritt umfasst Komprimieren des gerollten, gefüllten Gebäckproduktes. Das Ausmaß des Komprimierens kann den Erfordernissen des erwünschten Produktes entsprechend erfolgen. So ist es im Rahmen der vorliegenden Erfindung, dass das gerollte, gefüllte Gebäckprodukt soweit komprimiert wird, dass das solchermaßen erhaltene Produkt ein waffelartiges Produkt darstellt und/oder eine Sandwichstruktur aufweist.

Die Erfindung wird nun an Hand der folgenden Figuren veranschaulicht, aus denen sich weitere Merkmale, Ausführungsformen und Vorteile der Erfindung ergeben, dabei zeigt
- Fig. 1: einen Längsschnitt durch eine Ausführungsform eines erfindungsgemäßen füllbaren Waffelröllchens;
- Fig. 2: eine Aufsicht auf ein erstes Ende einer Ausführungsform eines erfindungsgemäßen füllbaren Waffelröllchens;
- Fig. 3: einen Längsschnitt durch eine Ausführungsform eines erfindungsgemäßen gefüllten Waffelröllchens;
- Fig. 4: einen Längsschnitt durch eine Ausführungsform eines erfindungsgemäßen gefüllten Waffelröllchens; und
- Fig. 5: eine Aufsicht auf ein erstes Ende 3 einer Ausführungsform eines erfindungsgemäßen gefüllten Waffelröllchens 1, wie in Fig. 4 dargestellt.

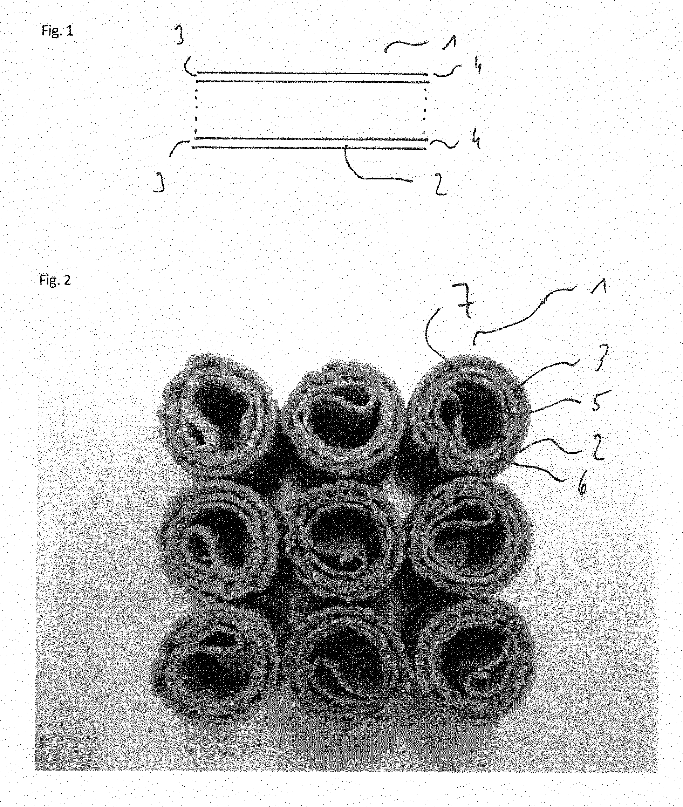

Fig. 1 zeigt einen Längsschnitt durch eine Ausführungsform eines erfindungsgemäßen füllbaren Waffelröllchens 1. Das Waffelröllchen 1 als ein Beispiel für ein gerolltes Gebäckstück ist aus einem blattförmigen, rollbaren Gebäckteil, das hier als gerolltes Waffelblatt 2 ausgebildet ist, herstellt und weist, in Längsrichtung, ein erstes Ende 3 und ein zweites Ende 4 auf. Der durch das gerollte Waffelblatt definierte Innenraum des Waffelröllchens ist hohl und weist keine Füllung mit einer Füllmasse auf. In den Hohlraum der Waffelröllchen kann in einem nächsten Verfahrensschritt die Füllmasse bspw. mit einem Injektor eingebracht werden.
Fig. 2 zeigt eine Aufsicht auf ein erstes Ende 3 einer Ausführungsform eines erfindungsgemäßen füllbaren Waffelröllchens 1, welches mehrfach abgebildet ist. Das durch Einrollen eines Waffelblatts 2 ausgebildete Waffelröllchen weist neben dem distalen Ende 3 eine ebenfalls durch das Einrollen ausgebildete Schleife 5 auf. Die Schleife 5 legt sich an die Innenseite der Wandung 6 des röhrenförmigen Waffelproduktes an und bleibt als solches erhalten. Die Schleife 5 erstreckt sich fast vollständig durch den Hohlraum 7 des Waffelröllchens auf die gegenüberliegende Seite des Hohlraumes 7.

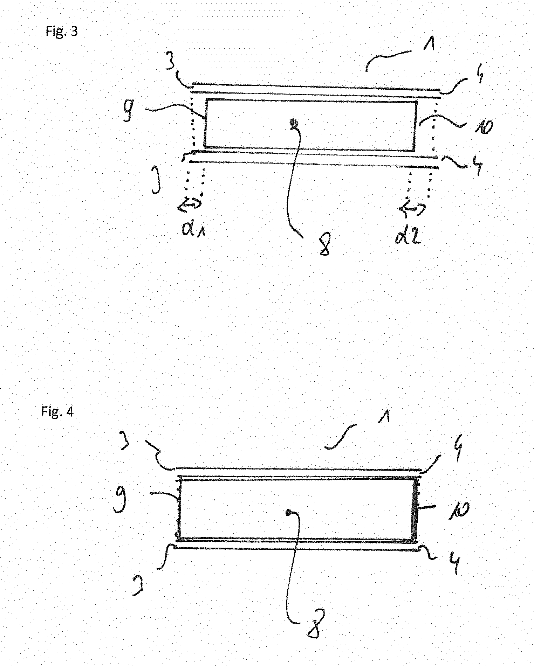

Fig. 3 zeigt einen Längsschnitt durch eine Ausführungsform eines erfindungsgemäßen gefüllten Waffelröllchens. Das Waffelröllchen 1 ist aus einem gerollten Waffelblatt 2 herstellt, weist, in Längsrichtung, ein erstes Ende 3 und ein zweites Ende 4 auf und erstreckt sich über die Länge Lw. Das gefüllte Waffelröllchen weist weiterhin eine Füllung 8 auf. Die Füllung 8 bildet relativ zu den Enden 3 und 4 des Waffelröllchens eine erste Kante 9 und eine zweite Kante 10 aus, die einen definierten Abstand d1 und d2 zu den Enden 3 und 4 aufweisen. Die definierten Abstände d1 und d2 sind über den Umfang des Waffelröhrchens im Wesentlichen konstant ausgebildet. Bei der hier gezeigten Ausführungsform handelt es sich bei der Füllung um eine solche, die als Schicht auf die Innenseite des Waffelröllchens aufgetragen ist und somit ein Hohlraum im Inneren des Waffelröllchens erhalten bleibt. Die durch die Füllmasse 8 ausgebildete Schicht weist über den gesamten Umfang über ihre gesamte Länge L_{F} eine konstante Stärke auf Es ist jedoch im Rahmen der vorliegenden Erfindung, dass die Füllung den gesamten Hohlraum des Waffelröllchens ausfüllt.

Fig. 4 zeigt einen Längsschnitt durch eine Ausführungsform eines erfindungsgemäßen gefüllten Waffelröllchens. Das Waffelröllchen 1 ist aus einem gerollten Waffelblatt 2 herstellt, weist, in Längsrichtung, ein erstes Ende 3 und ein zweites Ende 4 auf und erstreckt sich über die Länge Lw. Das gefüllte Waffelröllchen weist weiterhin eine Füllung 8 auf. Die Füllung bildet relative zu den Enden 3 und 4 des Waffelröllchens eine erste Kante 9 und eine zweite Kante 10 aus, wobei die erste Kante 9 der Füllung mit dem ersten Ende 3 des Waffelröllchens und die zweite Kante 10 der Füllung mit dem zweiten Ende 4 des Waffelröllchens fluchtet, d.h. bündig abschließt. Bei der hier gezeigten Ausführungsform handelt es sich bei der Füllung um eine solche, die als Schicht auf die Innenseite des Waffelröllchens aufgetragen ist und somit ein Hohlraum im Inneren des Waffelröllchens erhalten bleibt. Die durch die Füllmasse 8 ausgebildete Schicht weist über den gesamten Umfang über ihre gesamte Länge eine konstante Stärke auf. Es ist jedoch im Rahmen der vorliegenden Erfindung, dass die Füllung den gesamten Hohlraum des Waffelröllchens ausfüllt.

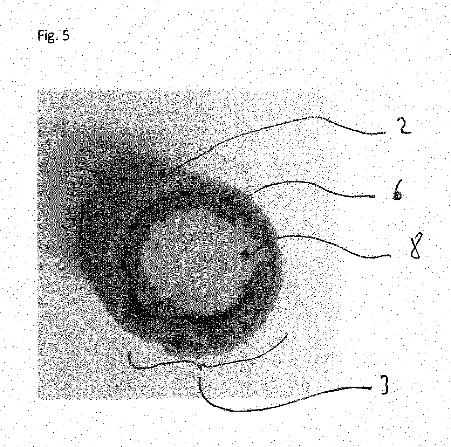

Fig. 5 zeigt eine Aufsicht auf ein erstes Ende 3 einer Ausführungsform eines erfindungsgemäßen gefüllten Waffelröllchens 1, wie in Fig. 4 dargestellt. Das durch Einrollen eines Waffelblatts 2 ausgebildete Waffelröllchen 1 weist eine ebenfalls durch das Einrollen ausgebildete Schleife 5 auf. Die Schleife 5 ist jedoch mit der Innenseite der Wandung 6 des röhrenförmigen Waffelproduktes fest verbunden und als solches praktisch nicht zu erkennen. Dies wird bspw. durch mechanisches Andrücken der Schleife 2 and die Wandung noch während das Waffelblatt 2 heißt ist, erreicht.

### Bezugszeichenliste

- 1: Waffelröllchen
- 2: Waffelblatt
- 3: erstes Ende des Waffelröllchens
- 4: zweites Ende des Waffelröllchens
- 5: Schleife
- 6: Wandung
- 7: Hohlraum
- 8: Füllmasse
- 9: erste Kante der Füllung
- 10: zweite Kante der Füllung
- 11: Bandlappen
- 11': Bandlappen
- 12: Wickelarm
- 13: Schneidwalze
- 14: Waffelblattbahn
- 14': Waffelblattbahn
- 15: Wickelarm

- L_{W}: Länge des Waffelblattes
- d1: Abstand erste Kante 9 zu erstem Ende 3
- d2: Abstand zweite Kante 10 zu zweitem Ende 3

Merkmale der Erfindung können sowohl einzeln als auch in beliebiger Kombination zur Verwirklichung der Erfindung in ihren verschiedenen Ausführungsformen wesentlich sein.

## Patentansprüche

1. Verfahren zur Herstellung eines mit einer Füllmasse gefüllten Gebäckproduktes, wobei das Verfahren umfasst Einrollen eines blattförmigen, rollbaren Gebäckteils mittels eines Einrollmittels, wobei durch das Einrollen des blattförmigen, rollbaren Gebäckteils ein mit einem Hohlraum versehenes Gebäckprodukt entsteht und die Wandung des mit einem Hohlraum versehenen Gebäckproduktes zumindest teilweise mehrlagig ausgebildet ist, und Einbringen der Füllmasse durch das Einrollmittel in das Gebäckprodukt.

2. Verfahren nach Anspruch 1, wobei das Einbringen der Füllmasse durch das Einrollmittel in das Gebäckprodukt erfolgt durch Auftragen der Füllmasse auf das blattförmige, rollbare Gebäckteil, das Einbringen der Füllmasse durch das Einrollmittel in das Gebäckprodukt während des Einrollens des blattförmigen, rollbaren Gebäckteils mittels des Einrollmittels erfolgt oder das Einbringen der Füllmasse durch das Einrollmittel in das Gebäckprodukt erfolgt nach Ausbildung des mit einem Hohlraum versehenen Gebäckproduktes.

3. Verfahren nach einem der Ansprüche 1 bis 2, wobei die Wandung des mit einem Hohlraum versehenen Gebäckproduktes durch das blattförmige, rollbare Gebäckteil ausgebildet wird.

4. Verfahren nach einem der Ansprüche 1 bis 3, wobei durch das Einrollen das blattförmige, rollbare Gebäckteil in dem mit einem Hohlraum versehenen Gebäckprodukt eine Schleife ausbildet, bevorzugterweise in dem Hohlraum des mit einem Hohlraum versehenen Gebäckproduktes eine Schleife ausbildet.

5. Verfahren nach einem der Ansprüche 1 bis 4, wobei das Einrollmittel eine Einrichtung ist oder umfasst, wobei die Einrichtung ausgewählt ist aus der Gruppe umfassend einen Wickeldorn eine Zwei-Zinken-Gabel, eine oder mehrere Rollen und einen oder mehrere Bandlappen.

6. Verfahren nach einem der Ansprüche 1 bis 5, wobei das Einrollmittel eine oder mehrere Öffnungen umfasst zum Einbringen der Füllmasse.

7. Verfahren nach einem der Ansprüche 1 bis 6, wobei das mit einer Füllmasse gefüllte Gebäckprodukt ein mit einer Füllmasse gefülltes röhrenförmiges Gebäckprodukt oder ein mit einer Füllmasse gefülltes konusförmiges oder kegelförmiges Gebäckprodukt ist.

8. Verfahren nach einem der Ansprüche 1 bis 7, wobei das blattförmige, rollbare Gebäckteil ein Waffelblatt ist.

9. Verfahren nach einem der Ansprüche 1 bis 8, wobei das mit einer Füllmasse gefüllte Gebäckprodukt ein mit einer Füllmasse gefülltes Waffelprodukt ist, bevorzugterweise ein mit einer Füllmasse gefülltes röhrenförmiges Waffelprodukt ist, bevorzugtererweise ein mit einer Füllmasse gefülltes Waffelröllchen ist, oder das mit einer Füllmasse gefüllte Gebäckprodukt eine mit einer Füllmasse gefüllte Waffelhippe ist.

10. Verfahren nach einem der Ansprüche 1 bis 9, wobei das blattförmige, rollbare Gebäckteil aus einer Mehrzahl von blattförmigen, rollbaren Teilgebäckteilen besteht, wobei ein jedes blattförmige, rollbare Teilgebäckteil der Mehrzahl von blattförmigen, rollbaren Teilgebäckteilen mit mindestens einem weiteren blattförmigen, rollbaren Teilgebäckteil der Mehrzahl von blattförmigen, rollbaren Teilgebäckteilen verbunden ist, und
ein jedes der Mehrzahl von blattförmigen, rollbaren Teilgebäckteilen mittels eines Einrollmittels eingerollt wird, wobei durch das Einrollen des blattförmigen, rollbaren Teilgebäckteils jeweils ein mit einem Hohlraum versehenes Teilgebäckprodukt entsteht und die Wandung des mit einem Hohlraum versehenen Teilgebäckproduktes zumindest teilweise mehrlagig ausgebildet ist, und die Füllmasse durch das Einrollmittel in das jeweilige Teilgebäckprodukt eingebracht wird.

11. Verfahren nach einem der Ansprüche 1 bis 10, wobei das Füllmittel ausgewählt ist aus der Gruppe umfassend Schokolade, Schokoladencreme, Gelee, fettbasierte Füllung, fruchtbasierte Füllung, würzige Pasten und Käsezubereitungen.

12. Verfahren nach einem der Ansprüche 1 bis 11, weiter umfassend Komprimieren des durch Einrollen des blattförmigen, rollbaren Gebäckteils erhaltenen, mit einem Hohlraum versehenen Gebäckproduktes, in das die Füllmasse durch das Einrollmittel eingebracht ist.

13. Gebäckprodukt, erhältlich durch ein Verfahren nach einem der Ansprüche 1 bis 12.

14. Gebäckprodukt nach Anspruch 13, wobei das Gebäckprodukt ein Waffelprodukt, bevorzugterweise ein röhrenförmiges Waffelprodukt oder eine Waffelhippe ist, und/oder das Gebäckprodukt eine Sandwichstruktur aufweist.

15. Gebäckprodukt nach einem der Ansprüche 12 bis 14, wobei das Gebäckprodukt aus einer Mehrzahl von mit einer Füllmasse gefüllten Teilgebäckprodukten besteht, wobei mindestens eines der mit einer Füllmasse gefüllten Teilgebäckprodukte der Mehrzahl von mit einer Füllmasse gefüllten Teilgebäckprodukten mit mindestens einem weiteren mit einer Füllmasse gefüllten Teilgebäckprodukten der Mehrzahl von mit einer Füllmasse gefüllten Teilgebäckprodukten verbunden ist.
